# EUROPEAN PATENT APPLICATION

(11) **EP 1 710 801 A1**
(43) Date of publication of application: **11.10.2006**
(21) Application number: 04792820.5
(22) Date of filing: 15.10.2004
(51) Int. Cl.: G11B 23/50, G11B 3/58

(54) **DISC CLEANING DEVICE**

(30) Priority: 30.01.2004 JP 2004023840
(71) Applicant: MATSUSHITA ELECTRIC INDUSTRIAL CO., LTD., Kadoma-shi, Osaka 571-8501 (JP)
(72) Inventor: NAKATA, Kuniko Matsushita Electric Ind. Co.,Ltd., Chuo-ku Osaka-shi Osaka 540-6319 (JP); OKAZAWA,Hironori Matsushita Electric Ind. Co.,Ltd., Chuo-ku Osaka-shi Osaka 540-6319 (JP); TAKIZAWA,Teruyuki Matsushita Electric Ind. Co.,Ltd, Chuo-ku Osaka-shi Osaka 540-6319 (JP)
(74) Representative: Grünecker, Kinkeldey, Stockmair & Schwanhäusser Anwaltssozietät
(86) International application number: PCT/JP2004/015678
(87) International publication number: WO 2005/073970

(57) **Abstract**

A disc cleaner includes: a supporting body 11 including a first holding plane **12a,** a disc supporting plane **13** and a convex portion **14,** where the first holding plane **12a** holds a first type of disc cartridge, which exposes one side of a disc therein and which includes a rotational member for opening and closing shutters, such that the exposed side of the disc faces the first holding plane **12a,** the disc supporting plane **13** is located higher than the first holding plane **12a** and contacts with a non-storage region of the disc around its center hole, thereby supporting the disc thereon, and the convex portion **14** fits into the center hole of the disc so as to stick out of the center hole; a shutter driving member **31** for turning the rotational member of the first type of disc cartridge; and a rotary knob **21** including a contact plane that contacts with the non-storage region of the disc around its center hole and a concave portion that fits the convex portion so as to turn against the convex portion.

## Description

### TECHNICAL FIELD

The present invention relates to a device for cleaning an optical disc stored in a cartridge.

### BACKGROUND ART

Conventional videotapes have been gradually replaced by large-capacity optical discs on which video can be stored. Those optical discs have such high densities that data may not be read from, or written on, them properly if the data storage side thereof is soiled with dust or gets scratched. To avoid those situations, optical discs stored in cartridges have been developed.

In a storage device in which an optical disc is stored in a cartridge, the cartridge includes a shutter. In the following description, a cartridge storing an optical disc therein will be simply referred to herein as a "disc cartridge". When the disc cartridge is loaded into a read/write drive, the shutter is opened, thereby letting a read/write head access the data storage side of the optical disc. However, if the disc cartridge has been unloaded from the read/write drive, the shutter has already been closed. Thus, the optical disc is protected from dust and scratches during storage.

As long as the optical disc is used in a normal condition, such operation of the shutter prevents dust from being deposited on the optical disc in the disc cartridge. In the read/write drive, however, the shutter of the disc cartridge is opened and dust may enter the disc cartridge through the opened window and deposit on the optical disc. Once dust has deposited on the optical disc, it is difficult to remove the dust out of the disc cartridge because the shutter is closed during storage.

To overcome such a problem, disc cleaners for cleaning an optical disc stored in a disc cartridge have been proposed.

For example, Japanese Patent Application Laid-Open Publication No. 11-273313 discloses a disc cleaner including a body with a shutter stopper. The shutter stopper can keep the shutter, which opens and closes by a sliding mechanism, opened.

This disc cleaner can change the positions of the shutter stopper so as to be loaded with, and clean, two different types of cartridges.

However, this structure can be used effectively only in a cartridge with a shutter that opens and closes by the sliding mechanism. Thus, the structure cannot cope with a disc cartridge in which a disc is stored with one side exposed and which includes a rotational member for opening and closing the shutter as disclosed in pamphlet of PCT International Application Publication No. 03/041076.

### DISCLOSURE OF INVENTION

In order to overcome the problems described above, an object of the present invention is to provide a disc cleaner that can accept such a disc cartridge, in which a disc is stored with one side exposed and which opens and closes a shutter by turning a rotational member, and that can open and close the shutter safely and just as intended by using a simple structure.

A disc cleaner according to the present invention includes: a supporting body including a first holding plane, a disc supporting plane and a convex portion, wherein the first holding plane holds a first type of disc cartridge, which exposes one side of a disc therein and which includes a rotational member for opening and closing shutters, such that the exposed side of the disc faces the first holding plane, the disc supporting plane is located higher than the first holding plane and contacts with a non-storage region of the disc around its center hole, thereby supporting the disc thereon, and the convex portion fits into the center hole of the disc so as to stick out of the center hole; a shutter driving member for turning the rotational member of the first type of disc cartridge; and a rotary knob including a contact plane that contacts with the non-storage region of the disc around its center hole and a concave portion that fits the convex portion so as to turn against the convex portion.

In one preferred embodiment, the supporting body further includes a second holding plane for holding a second type of disc cartridge with a shutter that opens and closes by sliding, and a shutter stopper for keeping the shutter of the second type of disc cartridge opened, and the disc supporting plane is located higher than the second holding plane.

In another preferred embodiment, the first holding plane is located between the second holding plane and the disc supporting plane.

In another preferred embodiment, the shutter driving member includes an interlocking portion that interlocks with a shutter operating portion provided for the rotational member of the first type of disc cartridge and a knob portion, and slides parallel to a side surface of the first type of disc cartridge with the rotational member and with respect to the supporting body.

In another preferred embodiment, the disc cleaner further includes a cap member for sandwiching at least a part of the interlocking portion of the shutter driving member between the supporting body and itself such that the shutter driving member will not drop off the supporting body, and the cap member is attached to the supporting body.

In another preferred embodiment, the supporting body further includes an elastic member for applying elastic force to the first type of disc cartridge toward the shutter driving member.

In another preferred embodiment, the supporting body has a first groove, which extends parallel to the side surface of the first type of disc cartridge with the rotational member when the disc cartridge is held, and the shutter driving member includes a first protrusion that fits into the first groove.

In another preferred embodiment, the supporting body and the shutter driving member engage with each other such that the first protrusion of the shutter driving member does not come off the first groove of the supporting body.

In another preferred embodiment, the supporting body has a first side, for which the first and second holding planes are defined, and a second side that is opposite to the first side. The first and second sides have a first groove and a second groove, respectively, which extend parallel to the side surface of the first type of disc cartridge with the rotational member. And the shutter driving member has a first protrusion and a second protrusion, which stick out so as to face each other and which fit into the first and second grooves, respectively.

In another preferred embodiment, the disc cleaner further includes a lid that covers at least the first type of disc cartridge held on the first holding plane of the supporting body, and the lid has an opening corresponding to a window of the first type of disc cartridge that exposes when the shutters open.

In another preferred embodiment, the lid is supported in a rotatable position near one side surface of the supporting body.

In another preferred embodiment, the lid is supported on the supporting body so as to be readily removable from, and attachable to, the supporting body.

In another preferred embodiment, the lid has a side surface extending toward the supporting body around the opening.

In another preferred embodiment, the lid has a raised position regulating portion on one side that faces the supporting body, and the position regulating portion regulates vertical motion of the first type of disc cartridge that is held on the supporting body.

In another preferred embodiment, at least part of the lid is transparent to the point that the first type of disc cartridge held on the first holding plane of the supporting body is seen though the lid.

In another preferred embodiment, the lid has a first groove, which extends substantially parallel to the side surface of the first type of disc cartridge with the rotational member when the disc cartridge is held, and the shutter driving member has a first protrusion that fits into the first groove.

In another preferred embodiment, the lid and the shutter driving member engage with each other such that the first protrusion of the shutter driving member does not come off the first groove of the lid.

In another preferred embodiment, the lid has a first side that faces the supporting body and a second side that is opposite to the first side. The first and second sides have a first groove and a second groove, respectively, which extend parallel to the side surface of the first type of disc cartridge with the rotational member. And the shutter driving member has a first protrusion and a second protrusion, which stick out so as to face each other and which fit into the first and second grooves, respectively.

In another preferred embodiment, the shutter driving member has a third protrusion. The supporting body has a third groove, which extends parallel to the side surface of the first type of disc cartridge with the rotational member when the disc cartridge is held, and which fits with the third protrusion of the shutter driving member, and a notch that communicates with the third groove such that the third protrusion of the shutter driving member is inserted into the third groove when the lid is attached to the supporting body so as to cover the first type of disc cartridge.

In another preferred embodiment, at least one of the shutter driving member and the lid has a fixing structure for fixing the shutter driving member onto the lid at a position where the third protrusion of the shutter driving member is insertable into the notch that communicates with the third groove.

In another preferred embodiment, the interlocking portion of the shutter driving member includes a rack and first and second fitting portions, which respectively engage with a gear portion and first and second notches that are provided for the rotational member of the first type of disc cartridge. The gear portion is interposed between the first and second notches. The first and second fitting portions are supported elastically on the rack so as to sandwich the rack between themselves.

In another preferred embodiment, the first fitting portion has a protrusion and contacts with the rotational member earlier than the second fitting portion in opening the shutters of the first type of disc cartridge. The supporting body has a guide groove that receives the protrusion of the first fitting portion. If the shutter driving member has been moved so as to open the shutters of the first type of disc cartridge, the guide groove drives the protrusion of the first fitting portion such that the first fitting portion contacts with a portion of the rotational member of the first type of disc cartridge other than the first notched portion and keeps the rotational member from turning, thereby retracting the first fitting portion.

In another preferred embodiment, the convex portion of the supporting body has two notched portions so as not to interfere with protrusions that are provided for the second type of disc cartridge so as to stick out of the center hole of the disc.

In another preferred embodiment, the supporting body includes a storage portion for storing the rotary knob and another storage portion for storing a bottle of a cleaning liquid for cleaning the first disc.

### BRIEF DESCRIPTION OF DRAWINGS

FIG. **1** is an exploded perspective view illustrating a first preferred embodiment of a disc cleaner according to the present invention.
FIG. **2** is a plan view illustrating how a first type of disc cartridge is held on the disc cleaner shown in FIG. **1.**
FIG. **3** is a plan view illustrating how the shutters of the first type of disc cartridge shown in FIG. **2** have been opened.
FIG. **4** is a cross-sectional view of the elastic member shown in FIG. **3**.
FIG. **5** is a plan view illustrating how a second type of disc cartridge is held on the disc cleaner shown in FIG. **1**.
FIG. **6** is a cross-sectional view illustrating the disc cleaner shown in FIG. **3**.
FIG. **7** is a cross-sectional view illustrating the disc cleaner shown in FIG. **5**.
FIG. **8** is a perspective view illustrating how a rotary knob and a cleaning liquid bottle are stored in the disc cleaner shown in FIG. **1.**
FIG. **9** is an exploded perspective view illustrating a second preferred embodiment of a disc cleaner according to the present invention.
FIG. **10(a)** is a plan view of the disc cleaner shown in FIG. **9**, and FIG. **10(b)** is a cross-sectional view of the shutter driving member attached to the supporting body.
FIG. **11** is a plan view illustrating how the disc cleaner shown in FIG. **9** works when the shutter driving member is slid.
FIG. **12** is a plan view illustrating how the disc cleaner shown in FIG. **9** works when the shutter driving member is further slid.
FIG. **13** is a plan view illustrating how the disc cleaner shown in FIG. **9** works when the shutter driving member is slid even further.
FIG. **14** is an exploded perspective view illustrating a third preferred embodiment of a disc cleaner according to the present invention.
FIG. **15** is a perspective view illustrating how the disc cleaner shown in FIG. **14** looks when its lid is opened.
FIGS. **16(a)** and **16(b)** are respectively a top view and a side view illustrating how the disc cleaner shown in FIG. **14** looks when its lid is opened.
FIG. **17(a)** is a top view of the disc cleaner shown in FIG. **14** and FIG. **17(b)** is a cross-sectional view of its shutter driving member.
FIG. **18(a)** is a plan view illustrating the reverse side of the lid and FIG. **18(b)** is a partial enlarged view thereof.
FIG. **19** is a perspective view illustrating a first type of cartridge.
FIG. **20** is an exploded perspective view of the first type of cartridge.

### BEST MODE FOR CARRYING OUT THE INVENTION

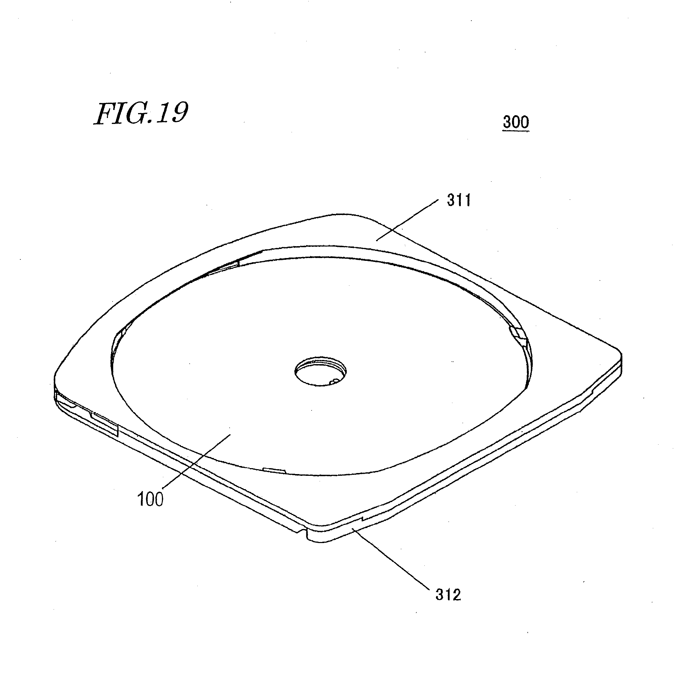

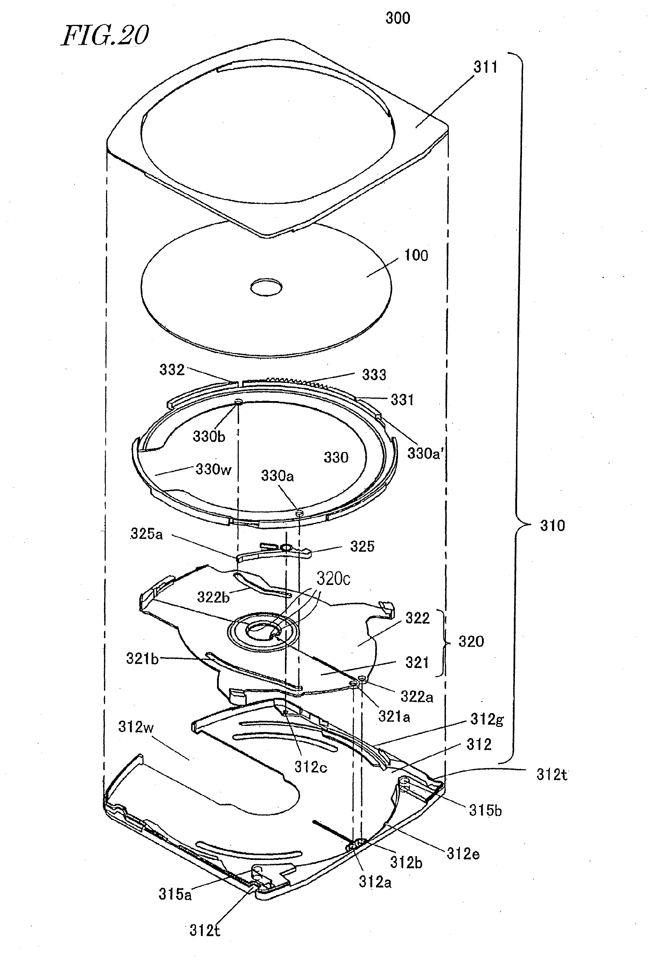

First, a disc cartridge that fits the disc cleaner of the present invention will be described. FIGS. **19** and **20** illustrate a first type of disc cartridge **300** that can be loaded into the disc cleaner of the present invention. As shown in FIGS. **19** and **20,** the disc cartridge **300** has a cartridge body **310** including an upper shell **311** and a lower shell **312,** a disc **10** stored in the cartridge body **310,** a window **312w** of the lower shell **312,** a shutter portion **320** for opening and closing the window **312w** to/from the outside, and a rotational member **330.**

As shown in FIGS. **19** and **20,** the upper shell **311** has a window that exposes one side of the disc **10** substantially entirely. Thus, while the disc **10** is stored in the cartridge body **310,** one side of the disc **10,** e.g., the label side thereof, is exposed through the window of the upper shell **311.** Rotation spindles **312a** and **312b** functioning as the axes of rotation of the shutter portion are provided on the inner surface of the lower shell **312.** Also, positioning holes **315a** and **315b** are made on the outer surface of the lower shell **312.** Another window **312g** is provided on a side surface of the cartridge body **310.**

The shutter portion **320** includes a first shutter **321** and a second shutter **322.** The first and second shutters **321** and **322** respectively have guide grooves **321b** and **322b** and rotation holes **321a** and **322a,** to which the rotation spindles **312a** and **312b** are inserted.

The rotational member **330** includes a flat ringlike portion and a cylindrical side surface located outside of the ringlike portion. Link spindles **330a** and **330b** to be inserted into the guide grooves **321b** and **322b,** respectively, are provided on the surface of the ringlike portion that is opposed to the shutter portion **320.** The ringlike portion further has a notched portion **330w.** Also, the side surface has a first notched portion **331,** a second notched portion **332** and a gear portion **333** interposed between them. These portions together function as a shutter operating member.

The disc cartridge **300** further includes a locking member **325,** which is supported so as to turn on a spindle 312c. The locking member **325** has a raised portion **325a.** When the shutter portion **320** is closed, the raised portion **325a** fits into the second notched portion **332,** thereby preventing the rotational member **330** from turning.

The rotational member **330** interlocks with the shutter portion **320** by way of the guide grooves **321b** and **322b** and the link spindles **330a** and **330b.** By turning the rotational member **330,** the shutter portion **320** can open or close the window **312w.** To turn the rotational member **330,** the first and second notched portions **331** and **332** and gear portion **333,** which are exposed through the window **312g** on the side surface of the cartridge body **310,** should get engaged with a shutter opening/closing mechanism provided for a disc drive, for example.

As described above, the first type of disc cartridge stores a disc therein with one side thereof exposed and slides an operating member on one of its side surfaces parallel to the disc, thereby opening shutters interlocked with its rotational member and exposing a part of the data storage side of the disc. The first type of disc cartridge is preferably a cartridge for a Blu-ray Disc. It should be noted that the first type of disc cartridge does not have to have quite the same structure as that illustrated in FIGS. **19** and **20.** But the first type of disc cartridge just needs to have such a structure that stores a disc therein with one side thereof exposed and slides an operating member on one of its side surfaces parallel to the disc, thereby opening shutters interlocked with its rotational member and exposing a part of the data storage side of the disc. The operating member may have a different structure but is preferably made up of the first and second notched portions **331** and **332** and the gear portion **333.**

A second type of disc cartridge that can be loaded into the disc cleaner of the present invention has the same structure as the cartridge disclosed in Japanese Patent Application Laid-Open Publication No. 11-273313. More specifically, the second type of disc cartridge includes a rectangular, airtight sliding shutter. By sliding the shutter, a window that exposes the data storage side of an optical disc and a non-storage region to chuck the disc is opened. The second type of disc cartridge is preferably a cartridge for a DVD-RAM.

### EMBODIMENT 1

Hereinafter, a first preferred embodiment of a disc cleaner according to the present invention will be described with reference to the accompanying drawings.

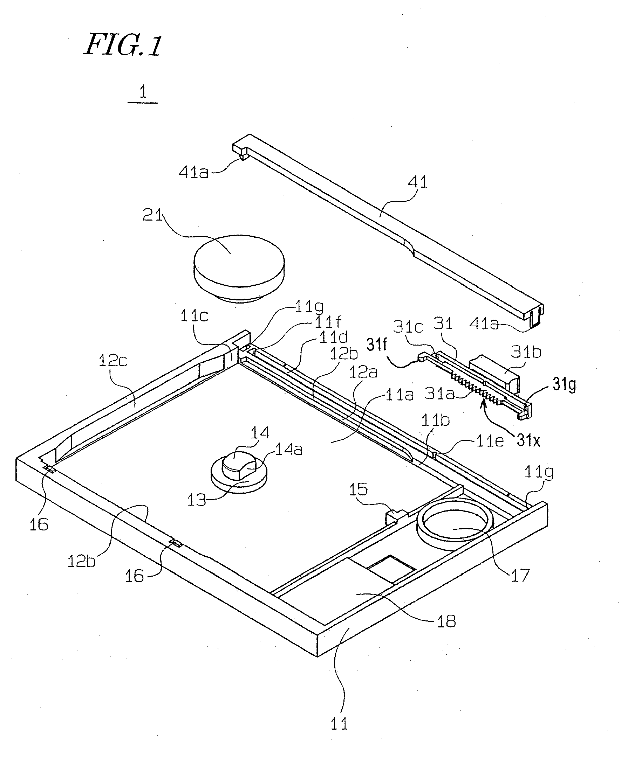

As shown in FIG. **1,** the disc cleaner **1** includes a supporting body **11,** a rotary knob **21,** a shutter driving member **31** and a cap member **41.** These members are preferably made of a synthetic resin, for example. However, not all of these members have to be made of the same material. But the best materials are selected for the respective members with the strengths and appearances required for these members taken into consideration.

The supporting body **11** has a first holding plane **12a** for holding the first type of disc cartridge **300** thereon, a first pair of sidewalls **12b,** which rises perpendicularly upward from the first holding plane **12a,** and a first rear end wall **12c,** which also rises perpendicularly upward from the first holding plane **12a.**

The supporting body **11** also has a second holding plane **11a** for holding the second type of disc cartridge **51** (see FIG. **5)** thereon, a second pair of sidewalls **11b,** which rise perpendicularly upward from the second holding plane **11a,** and a second rear end wall **11c,** which also rises perpendicularly upward from the second holding plane **11a.**

Substantially at the center of the second holding plane **11a,** provided are a disc supporting plane **13** for supporting the disc **100** thereon by contacting with the non-storage region of the disc **100** around its center hole and a convex portion **14,** which fits into the center hole of the disc **100,** is concentric with the disc supporting plane **13,** and has two D-cut notches **14a.**

Also, the first holding plane **12a** is located at a level between the second holding plane **11a** and the disc supporting plane **13.** This point will be described in further detail later.

The shutter driving member **31** includes an interlocking portion **31x** and a knob portion **31b.** The interlocking portion **31x** has a structure that interlocks with the operating portion of the rotational member in the first type of disc cartridge **300.** More specifically, the interlocking portion **31x** includes a rack portion **31a** that engages with the gear portion **333** and first and second fitting portions **31f** and **31g** that fit into the first and second notches **331** and **332,** respectively. The first and second fitting portions **31f** and **31g** are supported elastically on the rack portion **31a** so as to sandwich the rack portion **31a** between themselves. The shutter driving member **31** includes a protrusion that fits into a groove **11d** provided for the supporting body **11** so as to slide along the groove **11d** freely. The groove **11d** is provided near, and parallel to, a side surface of the first type of disc cartridge **300** with the rotational member **330.**

The interlocking portion **31x** includes a locking portion **31c.** While the shutter driving member **31** is not used, the locking portion **31c** gets locked with a first locking fit portion **11e** that communicates with the groove **11d** of the supporting body **11.** On the other hand, when the shutters **320** are kept opened by using the shutter driving member **31,** the locking portion **31c** of the shutter driving member **31** gets locked with a second locking fit portion **11f** that also communicates with the groove **11d** of the supporting body **11.**

To prevent the shutter driving member **31** from dropping off, the rack portion **31a** is covered with a cap member **41.** The cap member **41** has two fixing tabs **41a** to be fixed onto two fixing walls **11g** of the supporting body **11** such that the shutter driving member **31** does not come off. The cap member **41** just needs to sandwich at least a part of the interlocking portion **31x** between the supporting body **11** and itself.

An elastic member **16** is provided on one of the sidewalls **12b** of the first pair, which is opposite to the other sidewall **12b** with the shutter driving member **31.** This elastic member **16** applies elastic force to the first type of disc cartridge **300** toward the shutter driving member **31.**

A shutter stopper **15** is provided so as to rise perpendicularly upward from the second holding plane **11a.** When the second type of disc cartridge **51** is held on the second holding plane **11a,** the shutter stopper **15** keeps the shutter **52** opened.

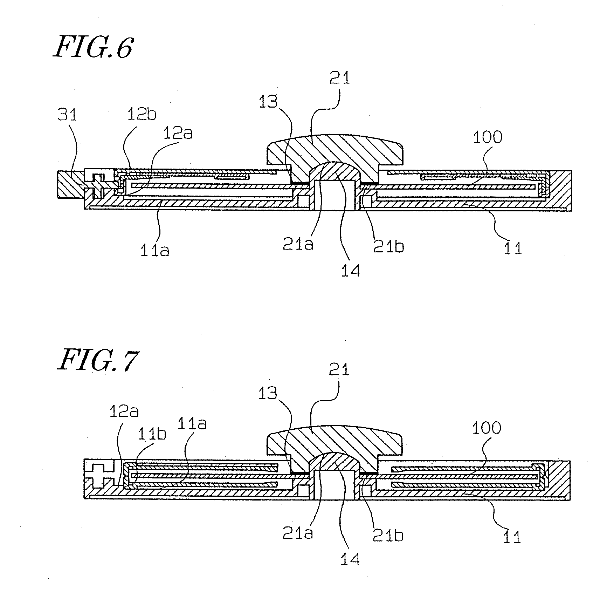

As shown in FIGS. **6** and **7,** the rotary knob **21** includes a concave portion **21a** that fits with the convex portion **14** and an antislip portion **21b.** The concave portion **21a** fits with the convex portion **14** so as to turn around the convex portion **14.** The antislip portion **21b** contacts with a non-storage region of the disc **100** around the center hole thereof and turns the disc **100** without slipping it as the rotary knob **21** is turned.

On a front end portion of the supporting body **11,** provided are a rotary knob storage portion **17** and a cleaning liquid bottle storage portion **18.**

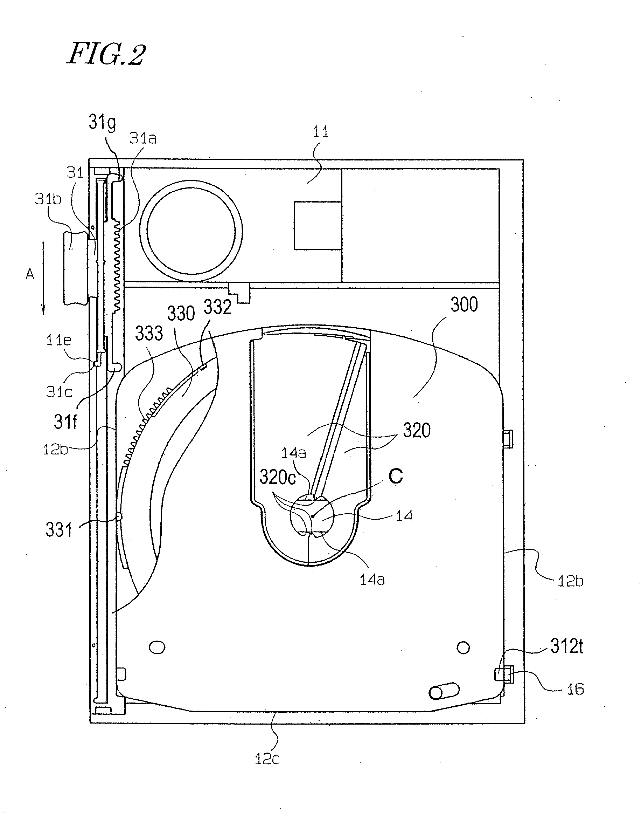

Hereinafter, it will be described with reference to FIGS. **2** through **7** how to clean the data storage side of the disc **100** that is stored in either the first type of disc cartridge **300** or the second type of disc cartridge **51.**

FIG. **2** illustrates how the first type of disc cartridge **300** is held on the disc cleaner **1.**

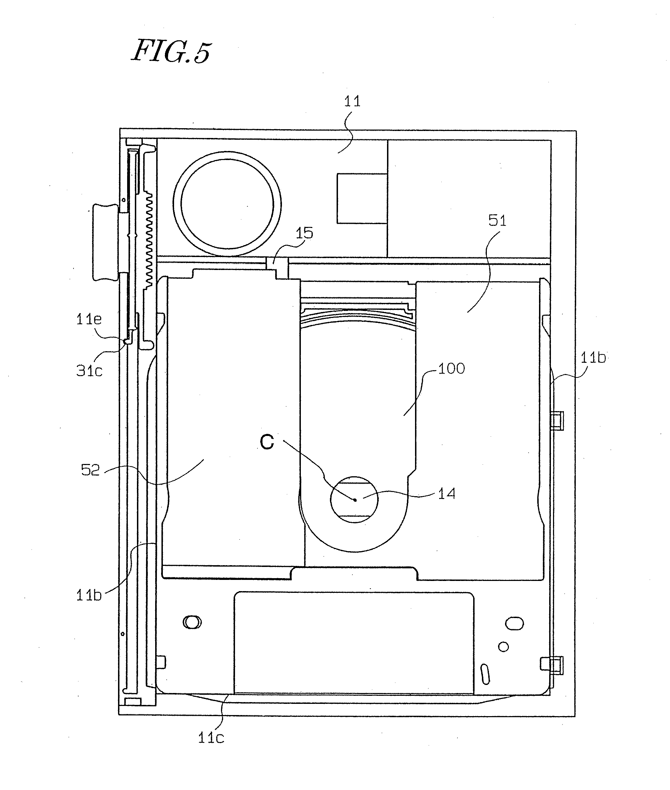

While the locking portion **31c** of the shutter driving member **31** is locked with the first locking fit portion **11e** in the front end portion of the supporting body **11,** the first type of disc cartridge **300** with closed shutters **320** is held on the first holding plane **12a** of the disc cleaner **1** with the shutters faced upward. That is to say, the disc cartridge **300** is held such that the data storage side of the disc faces upward and that the label side exposed through the window faces the supporting body **11.** The first type of disc cartridge **300** has its position regulated by the first pair of sidewalls **12b** and the first rear end wall **12c.** At the same time, the elastic member **16** fits into a recess **312t** on the side surface of the first type of disc cartridge **300** as shown in FIG. **4.** As a result, elastic force is applied to the first type of disc cartridge **300** toward the shutter driving member **31** and the disc cartridge **300** is pressed and fixed so as not to come off upward.

In this case, as for the disc **100** stored in the first type of disc cartridge **300,** the non-storage region thereof around its center hole contacts with, and is supported by, the disc supporting plane **13.** In the first type of disc cartridge **300** in the closed state, the shutters **320** make a hole over the center hole of the disc **100.** This hole has three protrusions **320c** for preventing the storage area of the disc **100** from getting scratched. The convex portion **14** fits into the center hole of the disc **100** but has two D-cut notches **14a** so as to avoid interference with the protrusions **320c** of the shutters **320.** It should be noted that the distance **L1** from the center **C** of the convex portion **14** to one of the sidewalls **12b** of the first pair with the shutter driving member **31** is set longer than the distance **L2** from the center **C** of the convex portion **14** to the other sidewall **12b** of the first pair. This is because in this disc cartridge **300,** the disc **100** is held so as to be slightly offset from the center of the disc cartridge.

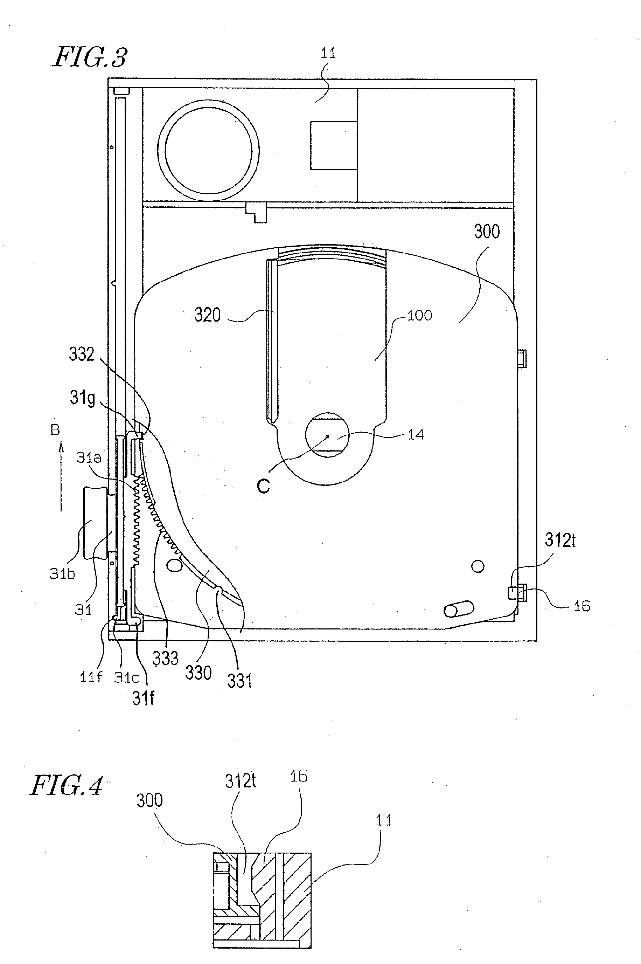

After the disc cartridge **300** has been loaded in this manner, the knob portion **31b** of the shutter driving member **31** is shifted in the direction pointed by the arrow **A.** Then, the first fitting portion **31f** fits into the first notch **331** while the locking member **325** (see FIG. **20)** is pressed by the rack portion **31a** of the interlocking portion **31x.** As a result, the rotational member **330,** which has been locked by the locking member **325,** is now unlocked and free to turn. Accordingly, if the shutter driving member **31** is further shifted in the arrow A direction, then the first fitting portion **31f** turns the rotational member **330.** As the shutter opening/closing portion **31** further moves, the rack portion **31a** soon gets engaged with the gear portion **333** of the rotational member **330** and the second fitting portion **31g** soon fits into the second notched portion **332,** thus further turning the rotational member **330.** As a result, the shutters **320** open as shown in FIG. **3** and the data storage side of the disc **100** is exposed. When the rack portion **31a** is further moved toward the rear end portion to the point that the locking portion **31c** gets locked with the second locking fit portion **11f,** the opening operation ends. In this state, i.e., in a situation where the first type of disc cartridge **300** is held on the supporting body **11** with the shutters **320** opened, the rotational member **330** of the first type of cartridge **300** is engaged with the shutter driving member **31.** That is why the first type of cartridge **300** cannot be removed in that state.

By turning the rotary knob **21** in such a state with the knob **21** fitted with the convex portion **14,** the disc **100** can be rotated due to a friction caused between the rotary knob **21** and the disc **100.** To clean the data storage side of the disc **100,** a piece of cleaning cloth may be dampened with the cleaning liquid in the cleaning liquid bottle **71,** put on the disc **100** and then moved in the disc radial direction, thereby wiping out the dust and dirt deposited on the data storage side of the disc **100.** Once the exposed portion of the data storage side has been cleaned in this manner, the disc **100** is rotated by further turning the rotary knob **21** and the cleaning operation described above is repeated. Then, the entire data storage side of the disc **100** can be cleaned soon. When the cleaning operation is finished, the knob portion **31b** of the shutter driving member **31** is moved in the direction pointed by the arrow **B** in FIG. **3.** Then, the rotational member **330** turns in the opposite direction and the shutters **320** will soon be closed as shown in FIG. **2.** In that state, the first type of disc cartridge **300** can be removed from the supporting body **11.**

FIG. **5** illustrates how the second type of disc cartridge **51** is held on the disc cleaner **1.** The second type of disc cartridge **51** has a rectangular shape and has a U-shutter **52** attached at its front end so that the shutter **52** can slide horizontally.

To load the second type of disc cartridge **51** into the disc cleaner, first, the disc cartridge **51** is held upside down on the second holding plane **11a** with its shutter **52** opened. That is to say, the disc cartridge **51** is held such that the data storage side of the disc **100** is exposed and faced upward. In this case, the second type of disc cartridge **51** has its horizontal position regulated by the second pair of opposed sidewalls **11b** of the supporting body **11,** its rear end position regulated by the second rear end wall **11c** and its front end position regulated by the shutter stopper **15.** As a result, the second type of disc cartridge **51** is held on the supporting body **11** with its shutter **52** kept opened and the data storage side of the disc **100** exposed.

At this point in time, the non-storage region surrounding the center hole of the disc **100** stored in the second type of disc cartridge **51** contacts with, and is supported by, the disc supporting plane **13.** The convex portion **14** fits into the center hole of the disc **100.** The distances from the center **C** of the convex portion **14** to the two sidewalls **11** of the second pair are equal to each other.

By turning the rotary knob **21** in such a state with the knob **14** fitted into the convex portion **14,** the disc **100** can be rotated. The method of cleaning the data storage side of the disc **100** is the same as the method of cleaning the disc **100** in the first type of disc cartridge **300** described above, and detailed description thereof will be omitted herein. When the cleaning operation is finished, the second type of disc cartridge **51** is removed from the supporting body **11.** Then, the shutter **52** will automatically slide and close itself by the action of a spring (not shown) included in the cartridge.

Next, the level relationship between the first holding plane **12a,** second holding plane **11a** and disc supporting plane **13** will be described. FIG. **6** is a cross-sectional view illustrating how the first type of disc cartridge **300** is held on the first holding plane **12a.** Meanwhile, FIG. **7** is a cross-sectional view illustrating how the second type of disc cartridge **51** is held on the second holding plane **11a.**

The disc **100** is received and supported by the disc supporting plane **13** and the center hole of the disc **100** fits into the convex portion **14.**

The first and second types of disc cartridges **300** and **51** have substantially equal thicknesses. However, the first type of disc cartridge **300** that exposes one side of the disc and the second type of airtight cartridge **51** have quite different internal structures. That is to say, the storage position of the disc **100** with respect to the upper and lower shells of one type of disc cartridge is different from that of the disc **100** in the other type of disc cartridge.

That is why if both types of disc cartridges were held on the same holding plane with the disc **100** also supported on the same disc supporting plane **13,** then the data storage side of the disc **100** would contact with the inner walls of the disc cartridge of either type. And if the disc **100** were rotated in such a state with the rotary knob **21,** the data storage side would get scratched.

Thus, to avoid those scratches, the first and second holding planes **12a** and **11a** are defined herein at mutually different levels. More specifically, the first holding plane **12a** is defined between the second holding plane **11a** and the disc supporting plane **13.** That is to say, the first holding plane **12a** is located at a higher level than the second holding plane **11a.**

As a result, no matter whether the first type of disc cartridge **300** or the second type of disc cartridge **51** is held with the disc **100** supported on the disc supporting plane **13,** the disc **100** can always be located substantially at the intermediate level of the inner wall space of the first or second type of disc cartridge **300** or **51.**

A preferred embodiment of the present invention has been described on how to clean the disc **100** in the disc cartridge. However, a disc **100** that is not stored in any disc cartridge can also be cleaned.

In that case, the center hole of the disc **100** is fitted into the convex portion **14** and the non-storage region on the reverse side of the disc **100,** surrounding the center hole, is received and supported by the disc supporting plane **13.** By turning the rotary knob **21** in such a state with the knob **14** fitted into the convex portion **14,** the disc **100** can be rotated. The method of cleaning the data storage side of the disc **100** is the same as the method of cleaning the disc **100** stored in the first type of disc cartridge **300** described above, and detailed description thereof will be omitted herein.

As described above, the disc cleaner of this preferred embodiment can clean a disc that is stored with one side thereof exposed in the first type of disc cartridge **300** where the shutters are opened and closed by turning the rotational member, a disc that is stored in the second type of rectangular and airtight disc cartridge **51** with a sliding shutter, and a bare disc that is not stored in any disc cartridge.

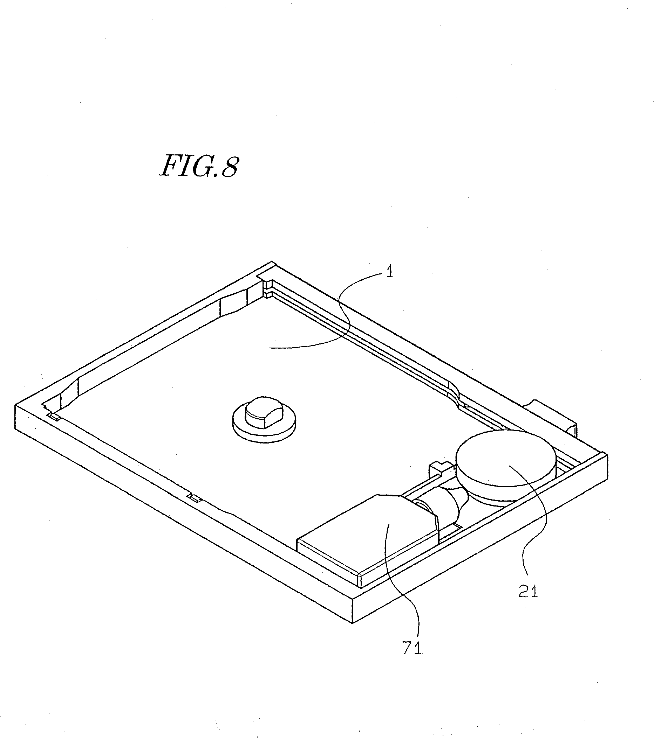

In addition, since the supporting body **11** includes storage recesses **17** and **18** for storing the rotary knob **21** and cleaning liquid bottle **71,** respectively, as shown in FIGS. **8** and **1,** the disc cleaner can be stored anywhere as a kit.

In the preferred embodiment described above, the cap member **41** is formed separately from the supporting body **11.** However, the cap member **41** may be shaped as a hinge by a resin molding process so as to form an integral part of the supporting body **11.**

Furthermore, if the shutter driving member **31** has an engaging shape that never allows the member **31** to come off the supporting body **11,** then the cap member may be omitted. In that case, the number of necessary parts can be reduced and the overall cost can be cut down.

In the preferred embodiment described above, the second type of disc cartridge **51** keeps the shutter **52** opened. Optionally, a sliding mechanism for opening the shutter **52** of the second type of disc cartridge **51** may be provided at the front end portion of the supporting body **11.** Then, the shutter **52** can also be kept closed and can be held more easily.

The rotary knob **21** described for the foregoing preferred embodiment can turn freely. And it is difficult to know to what degree the disc **100** has rotated (i.e., how much the disc **100** has been cleaned). Thus, the rotary knob **21** may have scales or indices so as to turn a distance that is smaller than the opening width of the shutters every time. As another alternative, the disc cleaner may also have a structure in which the rotary knob **21** and convex portion **14** can loosely fit with each other every time the rotary knob **21** has turned to that degree.

### EMBODIMENT 2

Hereinafter, a second preferred embodiment of a disc cleaner according to the present invention will be described with reference to the accompanying drawings.

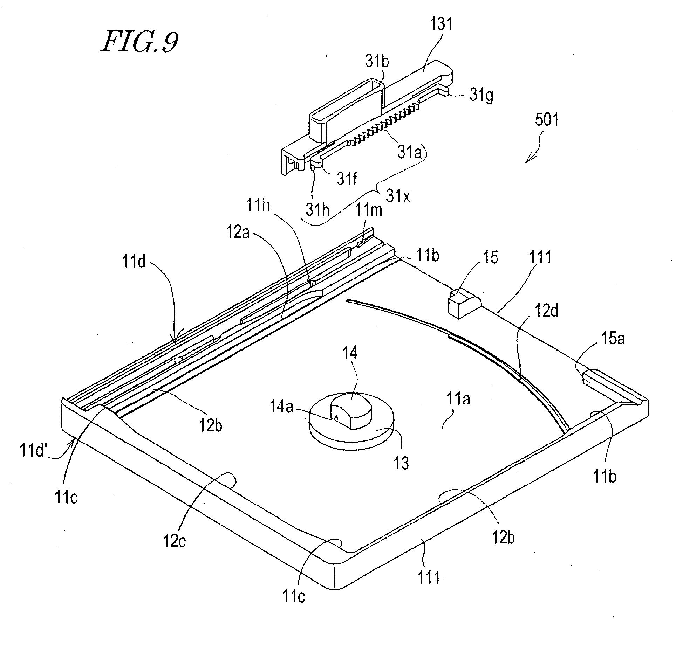

FIG. **9** is an exploded perspective view of a disc cleaner **501.** The disc cleaner **501** includes a supporting body **111** and a shutter driving member **131.** The disc cleaner **501** further includes a rotary knob, which is not shown in FIG. **9** because the knob has the same structure as the rotary knob **21** of the first preferred embodiment. Also, any component of this preferred embodiment, having the same function as the counterpart of the first preferred embodiment described above, is identified by the same reference numeral.

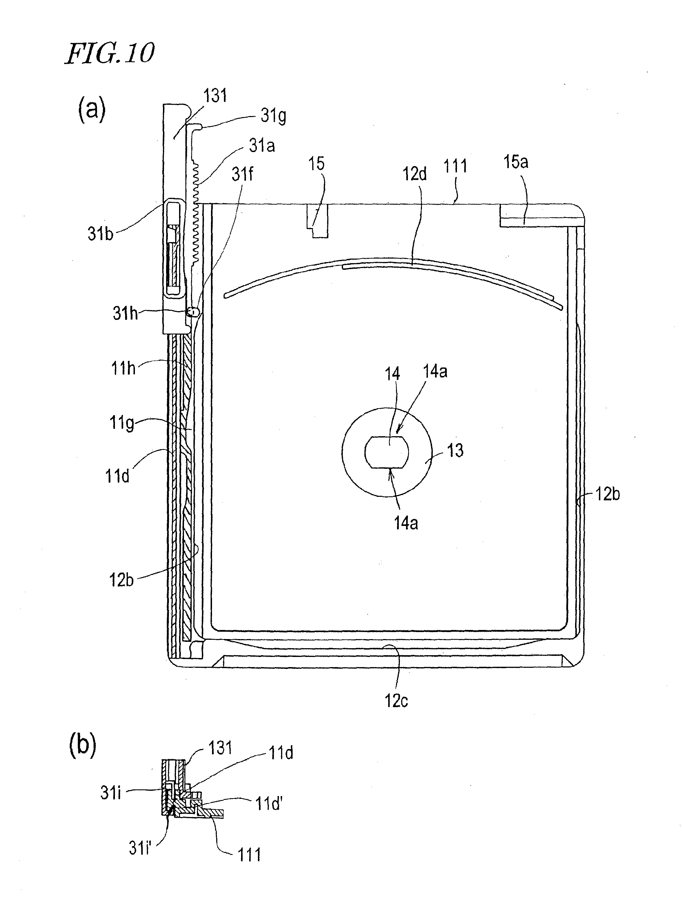

FIG. **10(a)** is a plan view of the supporting body **111** to which the shutter driving member **131** has been attached. FIG. **10(b)** is a cross-sectional view of the shutter driving member **131** attached to the supporting body **111** as viewed perpendicularly to the sliding direction thereof. Hereinafter, the structure of the disc cleaner **501** will be described in further detail with reference to FIGS. **9, 10(a)** and **10(b).**

As in the first preferred embodiment described above, the supporting body **111** also has the first holding plane **12a,** second holding plane **11a,** disc supporting plane **13,** convex portion **14** and shutter stopper **15.** These members and portions function in quite the same way as their counterparts of the first preferred embodiment. Also, a front end wall **15a** is provided on the second holding plane **11a** for the second type of cartridge **51.**

A protrusion **12d** that contacts with the front end of the first type of disc cartridge **300** to hold the disc cartridge **300** thereon is further provided on the second holding plane **11a.** To make the position to put the first type of disc cartridge **300** easily recognizable on the supporting body **111,** a groove that extends along the profile of the first type of disc cartridge **300** may be cut just outside of the protrusion **12d.**

On one side of the supporting body **111** on which the first and second holding planes **12a** and **11a** are defined, a groove **11d** and a guide groove **11h** are provided (as indicated by hatching in FIG. **10**). Also, another groove **11d'** is cut on the other side of the supporting body **111.** When the first type of disc cartridge **300** is held on the supporting body **111,** these grooves **11d** and **11d'** extend substantially parallel to the side surface of the first type of disc cartridge **300** with the rotational member **330.** A stopper portion **11m** is provided at one end of the groove **11d.**

The shutter driving member **131** also includes the interlocking portion **31x** and knob portion **31b.** As in the first preferred embodiment, the interlocking portion **31x** includes first and second fitting portions **31f** and **31g** and a rack portion **31a.** A protrusion **31h** is provided for the first fitting portion **31f**. The shutter driving member **31** includes protrusions **31i** and **31i'**, which stick out so as to face each other and respectively fit into the grooves **11d** and **11d'** of the supporting body **111.**

As shown in FIGS. **10(a)** and **10(b),** the protrusions **31i** and **31i'** of the shutter driving member **131** are inserted into the grooves **11d** and **11d',** respectively, from one end with the stopper portion **11m** and the shutter driving member **131** is attached to the supporting body **111** so as to slide along the grooves **11d** and **11d'.** The protrusions **31i** and **31i'** of the shutter driving member **131** are engaged with the supporting body **111** so as to sandwich both sides of the supporting body **111** between them. Thus, the shutter driving member **131** can slide without coming off the supporting body **111.** Also, the stopper portion **11m** prevents the protrusions **31i** and **31i'** from dropping off the insertion end of the grooves **11d** and **11d'.**

In this preferred embodiment, the grooves are cut on both sides of the supporting body **111** and the supporting body **111** is sandwiched between a pair of protrusions that fits with those grooves, thereby preventing the shutter driving member **131** from dropping off. However, as long as the shutter driving member **131** can slide parallel to the side surface of the first type of disc cartridge with the rotational member **330** and does not come off the supporting body **111** easily, the shutter driving member **131** and the supporting body **111** may be interlocked together by any other mechanism.

If a groove is cut on the supporting body **111** parallel to the side surface of the first type of disc cartridge with the rotational member **330** and if a protrusion that fits with that groove is provided for the shutter driving member **131,** then the shutter driving member **131** can perform its slide operation with good stability. However, this groove does not have to be cut on the front or reverse side of the supporting body **111** but may be located on a side surface of the supporting body **111.**

When the shutter driving member **131** is attached to the supporting body **111,** the protrusion of the first fitting portion **31f** has been inserted into the guide groove **11g** of the supporting body **111.** The guide groove **11g** is provided along the groove **11d.** However, the guide groove **11g** is not straight but has a predetermined profile. As the shutter driving member **131** slides, the protrusion of the first fitting portion **31f** is driven according to this profile such that the first fitting portion **31f** goes toward or away from the first type of disc cartridge **300** held on the supporting body **111.** More specifically, if the shutter driving member **131** is slid so as to open the shutters of the first type of disc cartridge **300,** the first fitting portion **31f** contacts with a portion of the rotational member **330** of the first type of disc cartridge **300** other than the first notch **331,** thereby retracting the first fitting portion **31f** from the rotational member **330** such that the rotational member **330** is not driven. This operation will be described in detail with reference to FIG. **10** and FIGS. **11** through **13.**

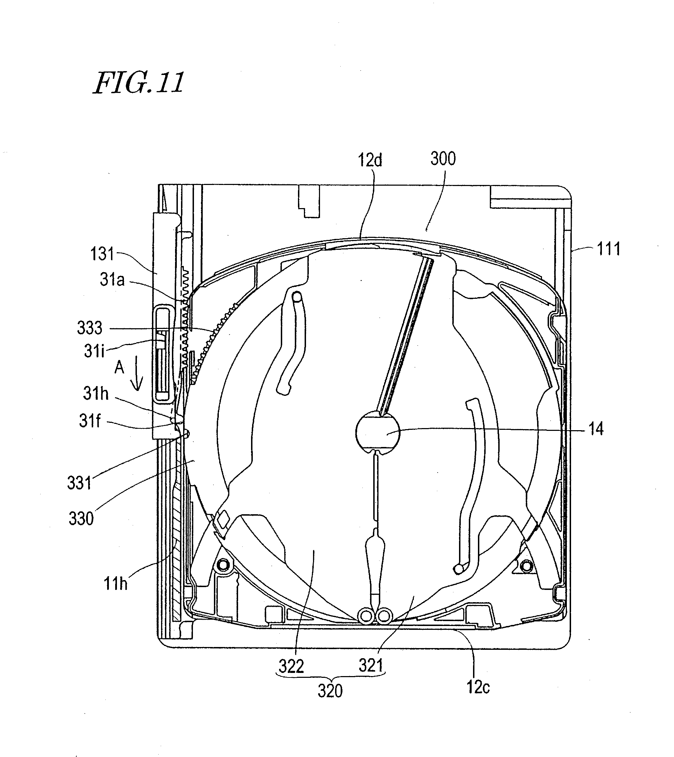

FIGS. **11** through **13** show the structures of the disc cleaner and first type of disc cartridge **300** with the lower shell **312** removed in a situation where the first type of disc cartridge **300** is held on the supporting body **111** and the shutter driving member **131** is slid. For the sake of simplicity of illustration, the locking member **325** is not shown. As shown in FIGS. **10(a)** and **11,** while the shutters **320** of the first type of disc cartridge **300** are still closed, the sliding member **131** is moved in the direction pointed by the arrow **A.** Since the guide groove **11h** extends linearly as shown in FIG. **10(a),** the first fitting portion **31f** can move without retracting. As the first fitting portion **31f** is getting closer to the rotational member **330** of the first type of disc cartridge **300,** the protrusion **31h** of the first fitting portion **31f** soon reaches a portion **11g** of the guide groove **11h** that bends away from the first type of disc cartridge **300.** As a result, the protrusion **31h** moves according to the profile of the guide groove **11h** and the first fitting portion **31f** retracts so as to avoid contact with the rotational member 330 as shown in FIG. **11.**

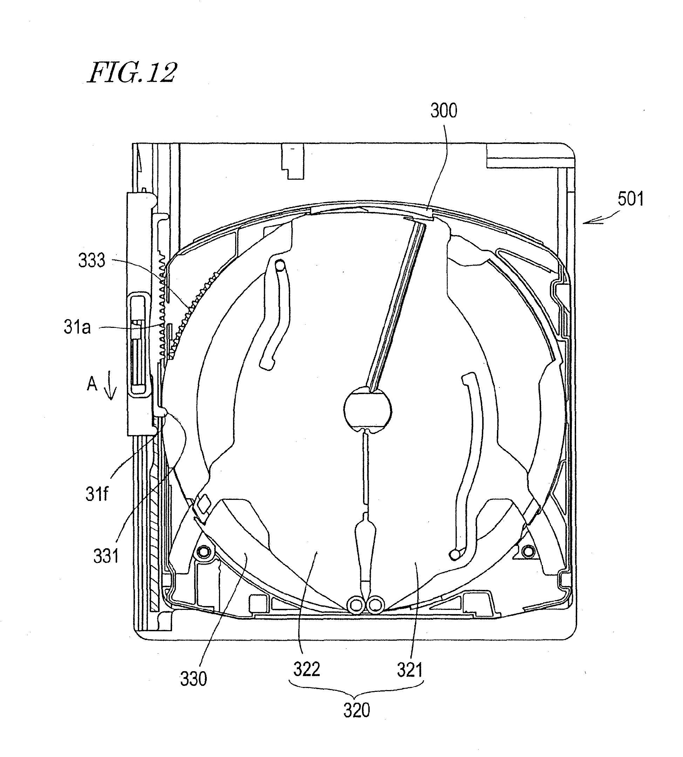

As the shutter driving member **131** further moves, the protrusion **31h** is driven according to the profile of the guide groove **11h** so as to get closer to the rotational member **330** as shown in FIG. **12.** Thus, the first fitting portion **31f** soon fits into the first notch **331** of the rotational member **330.** Then, as the shutter driving member **131** moves, the rotational member **330** turns in the direction pointed by the arrow **D.** In the meantime, the shutters **320** interlocked with the rotational member **330** also start its opening operation.

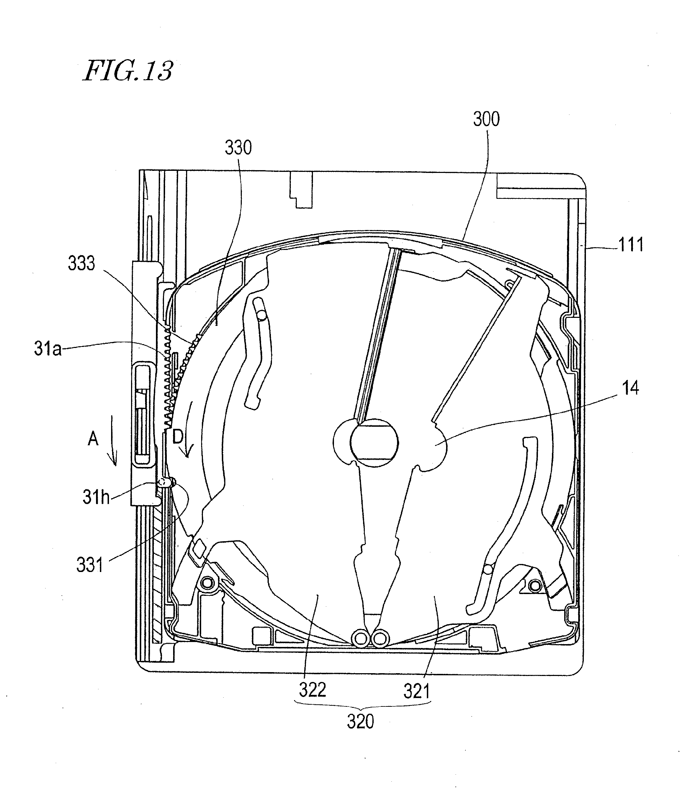

As shown in FIG. **13,** as the rotational member **330** further turns along with the shutter driving member **131** moving, the gear portion **333** soon gets engaged with the rack **31a.** As shown in FIG. **10(a),** the protrusion **31h** has reached the widened portion of the guide groove **11h.** That is why as the rotational member **330** turns, the protrusion **31h** can go slightly away from the rotational member **330** and the first fitting portion **31f** disengages itself from the first notch **331** and lands on a portion of the side surface between the first notch **331** and the gear portion **333.** Thereafter, the rotational member **330** turns due to the engagement between the rack **31a** and the gear portion **333** and keeps turning due to the engagement between the second fitting portion **31g** and the second notch **332** until the shutters **320** are fully opened. As a result, the optical disc **1** stored in the first type of disc cartridge **300** is exposed through the window **312w.**

It should be noted that when the shutters **320** are fully opened, the second fitting portion **31g** has fitted into the second notch **332** of the rotational member **330** as shown in FIG. **3.** Accordingly, even without being driven by the guide groove, the second fitting portion **31g** can get fitted into the second notch **332** of the rotational member **3330** at an appropriate timing. The operation of closing the shutters can be done by operating the respective members in quite the opposite directions. The second type of disc cartridge **51** can be held as already described for the first preferred embodiment.

Thus, according to this preferred embodiment, the shutter driving member **131** can interlock with the rotational member **330** of the first type of disc cartridge **300** and can open the shutters by performing its sliding operation.

### EMBODIMENT 3

Hereinafter, a third preferred embodiment of a disc cleaner according to the present invention will be described with reference to the accompanying drawings.

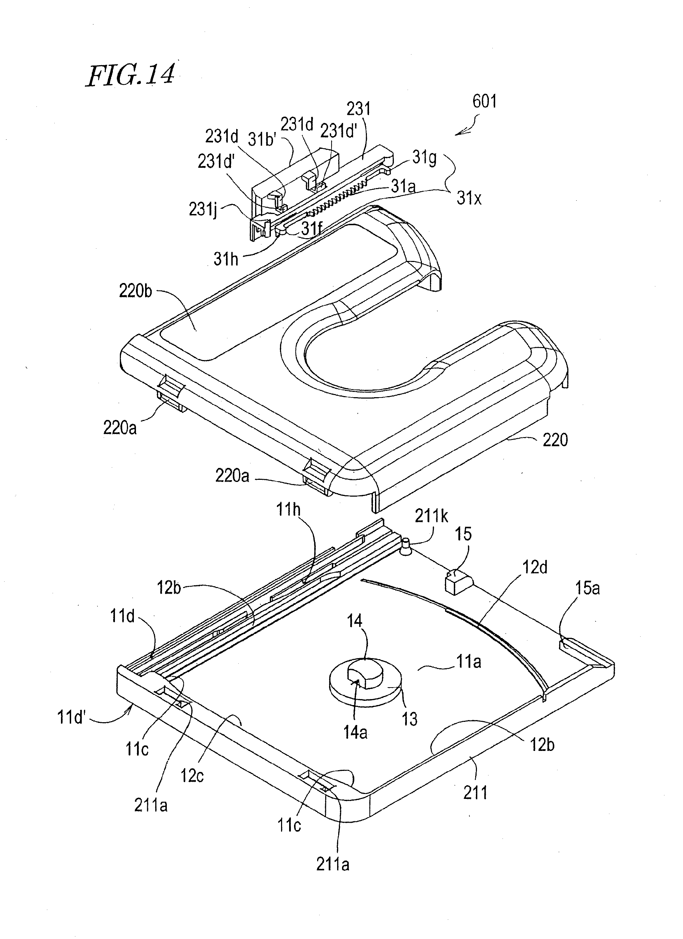

FIG. **14** is an exploded perspective view of a disc cleaner **601.** The disc cleaner **601** includes a supporting body **211,** a shutter driving member **231** and a lid **220.** As in the second preferred embodiment described above, the disc cleaner **601** further includes a rotary knob, which is not shown in FIG. **14** because the knob has the same structure as the rotary knob **21** of the first preferred embodiment. Also, any component of this preferred embodiment, having the same function as the counterpart of the first or second preferred embodiment described above, is identified by the same reference numeral.

Unlike the disc cleaner **501** of the second preferred embodiment, the disc cleaner **601** of this preferred embodiment further includes a lid **220** for covering the first type of cartridge **300** held on the supporting body **211** and the shutter driving member **231** is attached to that lid **220.**

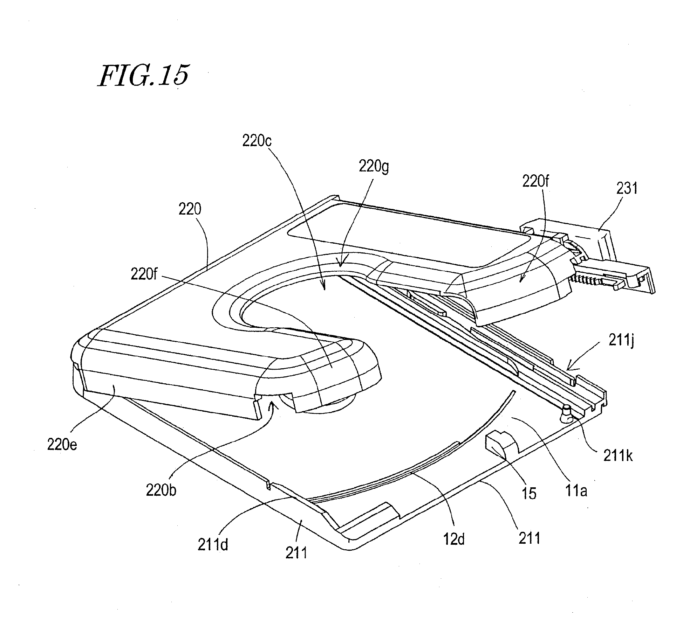

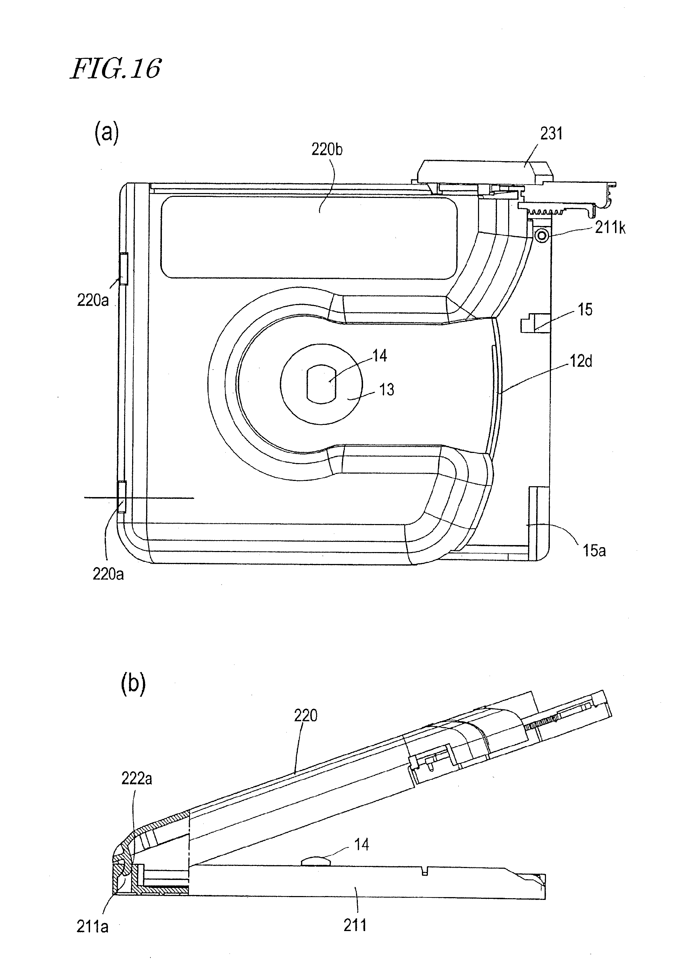

FIGS. **15, 16(a)** and **16(b)** are respectively a perspective view, a top view and a side view illustrating the disc cleaner **601** with the lid **220** opened.

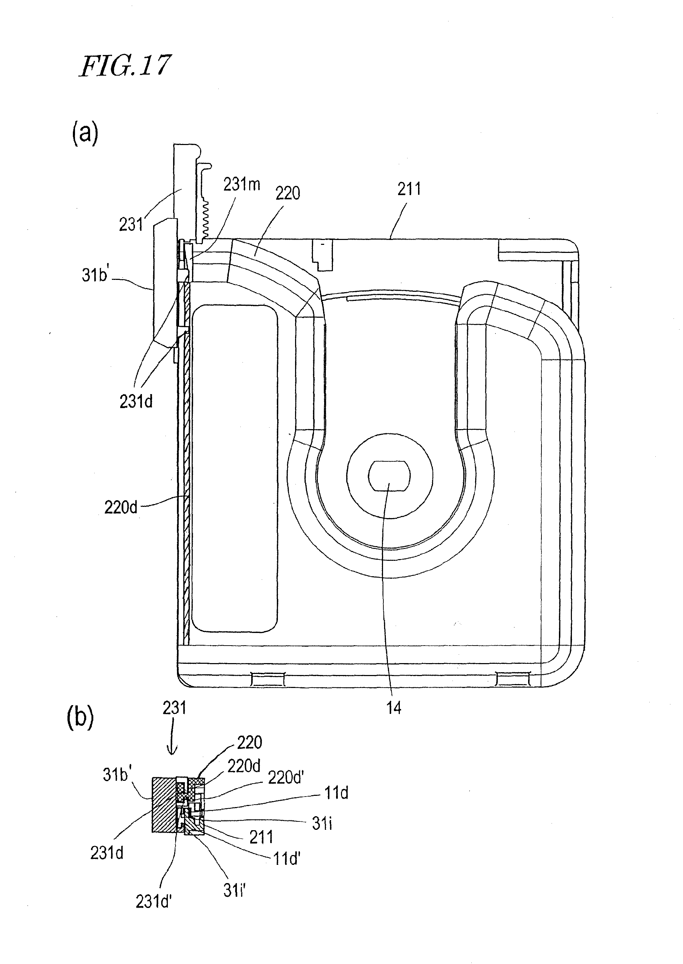

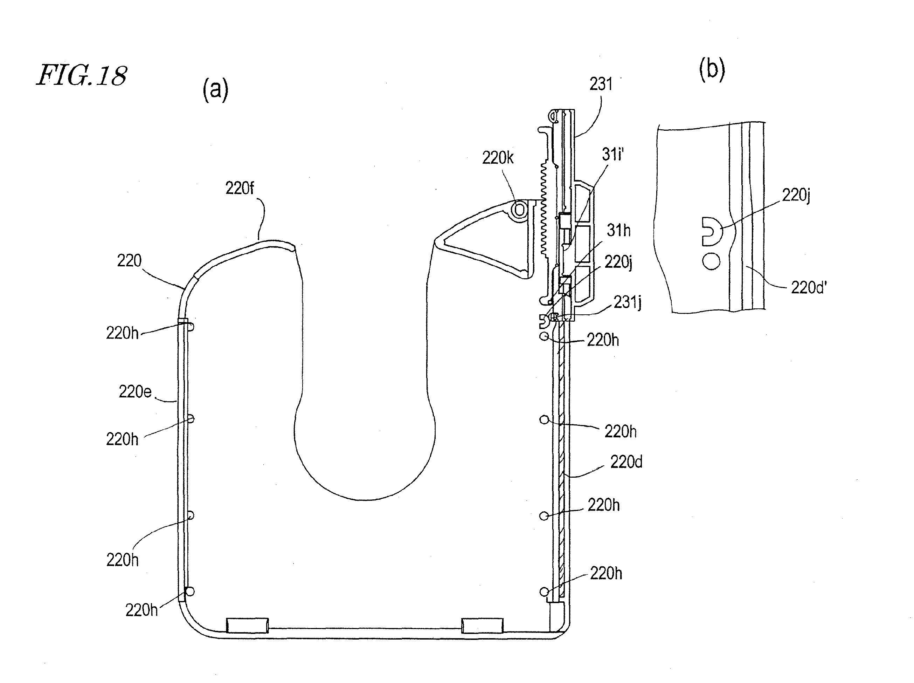

FIG. **17(a)** is a top view illustrating the disc cleaner **601** with the lid **220** opened and FIG. **17(b)** is a cross-sectional view of its shutter driving member **231** as viewed perpendicularly to its sliding direction. FIG. **18(a)** is a plan view of the lid **220** as viewed from under the supporting body **211** and FIG. **18(b)** is a partial enlarged view thereof. Hereinafter, the structure of the disc cleaner **601** will be described with reference to these drawings.

As in the second preferred embodiment, the supporting body **211** has the first holding plane **12a,** second holding plane **11a,** disc supporting plane **13,** convex portion **14,** shutter stopper **15,** front end wall **15a** and protrusion **12d.** These members and portions function in quite the same way as the counterparts of the second preferred embodiment described above. In addition, the supporting body **111** also has the grooves **11d, 11d'** and guide groove **11h** as in the second preferred embodiment, too.

To prevent the disc **10** from contacting with, and getting scratched by, the cartridge body **310** or shutters **320** while the operator is opening or closing the shutters with the first type of cartridge **300** pressed with his or her fingers during the disc cleaning operation, the lid **220** covers the first type of cartridge **300** held on the supporting body **211.** That is why the lid **220** may be separate from the supporting body **111.** From a handiness standpoint, however, the lid **220** is preferably supported so as to turn on one side surface of the supporting body **211.** For that purpose, the lid **220** has a pair of fitting protrusions **220a.** The supporting body **211** includes a pair of receiving portions **211a** for supporting the lid **220** in rotatable position by receiving the fitting protrusions **220a** inserted near one side surface thereof.

In cleaning the disc in the second type of disc cartridge **51,** however, the lid **220** is not necessary. That is why the fitting protrusions **220a** and receiving portions **211a** preferably fit each other so as to readily get disengaged from each other and remove the lid **220** in cleaning the second type of disc cartridge **51.**

The lid **220** covers the first type of cartridge **300** held on the supporting body **211.** Thus, at least part of the lid **220** is preferably transparent to the point that the operator can see if the first type of cartridge **300** is properly held on the supporting body **211** even when the cartridge **300** is covered with the lid **220.** More preferably, the overall lid **220** is made of a transparent resin.

The lid **220** has an opening **220c** corresponding to the window **312w** that opens when the shutters of the first type of cartridge **300** open. A portion of the lid **220** near the opening **220c** preferably defines a sidewall **220g** extending toward the supporting body **211**. In that case, the gap between the lid **220** and the first type of cartridge **300** can be so narrow as to prevent the operator from putting his or her finger through the opening **220c**. A side of the lid **220** opposite to its side with the fitting protrusions **220a** defines a front wall **220f.** Also, another side of the lid **220,** facing the side to which the shutter driving member **231** is attached, defines a sidewall **220e.** Optionally, the sidewalls **220g, 220e** and front wall **220f** may define a single curved surface.

A notch **220b** is provided between the sidewall **220e** and the front wall **220f** to prevent the lid **220** from interfering with the sidewall **211d** of the supporting body **211.** When the lid **220** is closed, the front wall **220f** contacts with the second holding plane **11a** of the supporting body **211.**

Also, as shown in FIG. **18(a),** the reverse side of the lid **220** that faces the supporting body **211** includes a plurality of position regulating portions **220h.** The position regulating portions **220h** regulate the vertical position of the first type of disc cartridge **300** so as to prevent the cartridge **300** from bouncing upward from the supporting body **211** once the lid **220** has been closed. Nevertheless, the position regulating portions **220h** preferably do not contact with the first type of disc cartridge **300.** This is because if those portions **220h** are in contact with the cartridge **300,** external force is easily applied to the first type of disc cartridge **300** when the user presses the lid **220** with his or her fingers.

The supporting body **211** has a pin **211k,** which is inserted into a hole **220k** of the lid **220** closed, thereby horizontally positioning the lid **220** with respect to the supporting body **211** and also preventing the lid **220** from shifting from the supporting body **211** due to external force applied during the cleaning operation.

The lid **220** may have a space **220b** to which a sticker giving instructions on how to clean a disc, for example, may be attached. Particularly when such a sticker attaching space **220b** is provided near the shutter driving member **231,** the proper position of the shutter driving member **231,** as well as the cleaning procedure, may be shown on that sticker. For example, it can be shown on the sticker where the shutter driving member **231** should be positioned when the first type of disc cartridge **300** is held on the supporting body **211** or when the disc cleaned is removed from the first type of disc cartridge **300.** Then, the user can use the disc cleaner **601** more easily and more properly.

Next, the shutter driving member **231** will be described. The shutter driving member **231** includes a knob portion **31b'** and an interlocking portion **31X.** The structure of the interlocking portion **31X** is the same as that of the second preferred embodiment. The shutter driving member **231** includes protrusions **231d, 231d'** that stick out so as to face each other. As shown in FIGS. **17(a)** and **18(a),** grooves **220d'** and **220d** are cut on one side of the lid **220** that faces the supporting body **211** and on the opposite side thereof, respectively. When the lid **220** is closed, the grooves **220d'** and **220d** extend parallel to the side surface of the first type of disc cartridge **300** with the rotational member **330**. A stopper portion **231m** is provided at one end of the groove **220d**.

The protrusions **231d'** and **231d** of the shutter driving member **231** are inserted into the grooves **220d'** and **220d,** respectively, from one end with the stopper portion **231m** and the shutter driving member **231** is attached to the lid **220** so as to slide along the grooves **220d'** and **220d**. The protrusions **231d**' and **231d** of the shutter driving member **231** are engaged with the lid **220** so as to sandwich both sides of the lid **220** between them. Thus, the shutter driving member **231** can slide without coming off the lid **220.** Also, the stopper portion **231m** prevents the protrusion **231d** from dropping off the groove **220d**.

As already described for the second preferred embodiment, as long as the shutter driving member **231** can slide parallel to the side surface of the first type of disc cartridge with the rotational member **330** and does not come off the lid **220** easily, the shutter driving member **231** and the lid **220** may be interlocked together by any other mechanism.

The shutter driving member **231** is provided to turn the rotational member **330** of the first type of disc cartridge **300.** Thus, after the first type of disc cartridge **300** has been put on the supporting body **211,** the lid **220** needs to be closed and the shutter driving member **231** needs to get engaged with the supporting body **211,** too, before starting to be slid. As shown in FIG. **17(b),** the supporting body **211** also has the grooves **11d** and **11d'** having the same structure as the counterparts of the second preferred embodiment. The shutter driving member **231** too has the protrusions **31i** and **31i'** with the same structure as the counterparts of the second preferred embodiment. These grooves and protrusions engage with each other as already described for the second preferred embodiment. However, the protrusion **31i'** of the shutter driving member **231** needs to fit into the groove **11d'** on the reverse side of the supporting body **211.**

That is why the supporting body **211** has a notch **211j** that communicates with the groove **11d'** as shown in FIG. **14.** When the lid **220** is closed, the protrusion **31d'** of the shutter driving member **231** is inserted through the notch **211j.** To ensure this insertion, at least the shutter driving member **131** or the lid **220** preferably has a fixing structure for fixing the shutter driving member **231** to the lid **220** where the protrusion **31i'** is insertable into the notch **2iij** that communicates with the groove **11d'.** For example, as shown in FIG. **18(b),** in order to prevent the shutter driving member **131** from going backward once the shutter driving member **131** has reached one end of the grooves **220d** and **220d'** so as to contact with the stopper portion **211m,** a hook **231j** provided for the shutter driving member **231** is made to contact with a receiving portion **220j** provided for the supporting body **211.** By arranging the notch **211j** such that the protrusion 31i' of the shutter driving member **231** can be inserted into the notch **211j** that communicates with the groove **11d'** at this position, the protrusion **31i'** can get fitted into the groove **11d'** through the notch **211j** when the lid **220** is closed.

The shutters of the first type of disc cartridge **300** can be opened and closed by sliding the shutter driving member **231** as already described for the second preferred embodiment.

As also mentioned above, the second type of disc cartridge **51** can be cleaned in the same procedure as that described for the first preferred embodiment with the lid **220** removed.

As described above, according to this preferred embodiment, the shutter driving member **231** is attached to the lid **220.** Accordingly, unless the lid **220** is closed, the shutters of the first type of disc cartridge **300** cannot be opened or closed and the disc stored there cannot be cleaned, either. In other words, whenever the disc stored in the first type of disc cartridge **300** is cleaned, the lid **220** must be closed. As a result, it is possible to avoid an unwanted situation where the person doing the cleaning operation happens to apply significant external force to the first type of disc cartridge **300** and scratch the disc accidentally.

Neither the second preferred embodiment nor third preferred embodiment has spaces for storing the rotary knob and cleaning liquid bottle as described for the first preferred embodiment. Optionally, those spaces may also be provided as in the first preferred embodiment.

### INDUSTRIAL APPLICABILITY

The present invention provides a disc cleaner that can clean a disc stored with one side thereof exposed in a disc cartridge where shutters are opened and closed by turning a rotational member.

The disc cleaner of the present invention can clean both a disc stored in any of disc cartridges with various shapes and a bare disc alike.

## Claims

1. A disc cleaner comprising:
a supporting body including a first holding plane, a disc supporting plane and a convex portion, wherein the first holding plane holds a first type of disc cartridge, which exposes one side of a disc therein and which includes a rotational member for opening and closing shutters, such that the exposed side of the disc faces the first holding plane, the disc supporting plane is located higher than the first holding plane and contacts with a non-storage region of the disc around its center hole, thereby supporting the disc thereon, and the convex portion fits into the center hole of the disc so as to stick out of the center hole;
a shutter driving member for turning the rotational member of the first type of disc cartridge; and
a rotary knob including a contact plane that contacts with the non-storage region of the disc around its center hole and a concave portion that fits the convex portion so as to turn against the convex portion.

2. The disc cleaner of claim 1, wherein the supporting body further includes a second holding plane for holding a second type of disc cartridge with a shutter that opens and closes by sliding, and a shutter stopper for keeping the shutter of the second type of disc cartridge opened, and
wherein the disc supporting plane is located higher than the second holding plane.

3. The disc cleaner of claim 2, wherein the first holding plane is located between the second holding plane and the disc supporting plane.

4. The disc cleaner of one of claims 1 to 3, wherein the shutter driving member includes an interlocking portion that interlocks with a shutter operating portion provided for the rotational member of the first type of disc cartridge and a knob portion, and slides parallel to a side surface of the first type of disc cartridge with the rotational member and with respect to the supporting body.

5. The disc cleaner of claim 4, further comprising a cap member for sandwiching at least a part of the interlocking portion of the shutter driving member between the supporting body and itself such that the shutter driving member will not drop off the supporting body, the cap member being attached to the supporting body.

6. The disc cleaner of one of claims 1 to 3, wherein the supporting body further includes an elastic member for applying elastic force to the first type of disc cartridge toward the shutter driving member.

7. The disc cleaner of claim 4, wherein the supporting body has a first groove, which extends parallel to the side surface of the first type of disc cartridge with the rotational member when the disc cartridge is held, and
wherein the shutter driving member includes a first protrusion that fits into the first groove.

8. The disc cleaner of claim 7, wherein the supporting body and the shutter driving member engage with each other such that the first protrusion of the shutter driving member does not come off the first groove of the supporting body.

9. The disc cleaner of claim 4, wherein the supporting body has a first side, for which the first and second holding planes are defined, and a second side that is opposite to the first side, and
wherein the first and second sides have a first groove and a second groove, respectively, which extend parallel to the side surface of the first type of disc cartridge with the rotational member, and
wherein the shutter driving member has a first protrusion and a second protrusion, which stick out so as to face each other and which fit into the first and second grooves, respectively.

10. The disc cleaner of one of claims 1 to 4, further comprising a lid that covers at least the first type of disc cartridge held on the first holding plane of the supporting body, and
wherein the lid has an opening corresponding to a window of the first type of disc cartridge that exposes when the shutters open.

11. The disc cleaner of claim 10, wherein the lid is supported in a rotatable position near one side surface of the supporting body.

12. The disc cleaner of claim 11, wherein the lid is supported on the supporting body so as to be readily removable from, and attachable to, the supporting body.

13. The disc cleaner of claim 10, wherein the lid has a side surface extending toward the supporting body around the opening.

14. The disc cleaner of claim 10, wherein the lid has a raised position regulating portion on one side that faces the supporting body, the position regulating portion regulating vertical motion of the first type of disc cartridge that is held on the supporting body.

15. The disc cleaner of claim 10, wherein at least part of the lid is transparent to the point that the first type of disc cartridge held on the first holding plane of the supporting body is seen though the lid.

16. The disc cleaner of claim 10, wherein the lid has a first groove, which extends substantially parallel to the side surface of the first type of disc cartridge with the rotational member when the disc cartridge is held, and
wherein the shutter driving member has a first protrusion that fits into the first groove.

17. The disc cleaner of claim 16, wherein the lid and the shutter driving member engage with each other such that the first protrusion of the shutter driving member does not come off the first groove of the lid.

18. The disc cleaner of claim 10, wherein the lid has a first side that faces the supporting body and a second side that is opposite to the first side, and
wherein the first and second sides have a first groove and a second groove, respectively, which extend parallel to the side surface of the first type of disc cartridge with the rotational member, and
wherein the shutter driving member has a first protrusion and a second protrusion, which stick out so as to face each other and which fit into the first and second grooves, respectively.

19. The disc cleaner of claim 10, wherein the shutter driving member has a third protrusion, and
wherein the supporting body has a third groove, which extends parallel to the side surface of the first type of disc cartridge with the rotational member when the disc cartridge is held, and which fits with the third protrusion of the shutter driving member, and a notch that communicates with the third groove such that the third protrusion of the shutter driving member is inserted into the third groove when the lid is attached to the supporting body so as to cover the first type of disc cartridge.

20. The disc cleaner of claim 19, wherein at least one of the shutter driving member and the lid has a fixing structure for fixing the shutter driving member onto the lid at a position where the third protrusion of the shutter driving member is insertable into the notch that communicates with the third groove.

21. The disc cleaner of claim 10, wherein the interlocking portion of the shutter driving member includes a rack and first and second fitting portions, which respectively engage with a gear portion and first and second notches that are provided for the rotational member of the first type of disc cartridge, the gear portion being interposed between the first and second notches, the first and second fitting portions being supported elastically on the rack so as to sandwich the rack between themselves.

22. The disc cleaner of claim 10, wherein the first fitting portion has a protrusion and contacts with the rotational member earlier than the second fitting portion in opening the shutters of the first type of disc cartridge, and
wherein the supporting body has a guide groove that receives the protrusion of the first fitting portion, and
wherein if the shutter driving member has been moved so as to open the shutters of the first type of disc cartridge, the guide groove drives the protrusion of the first fitting portion such that the first fitting portion contacts with a portion of the rotational member of the first type of disc cartridge other than the first notched portion and keeps the rotational member from turning, thereby retracting the first fitting portion.

23. The disc cleaner of one of claims 1 to 3, wherein the convex portion of the supporting body has two notched portions so as not to interfere with protrusions that are provided for the second type of disc cartridge so as to stick out of the center hole of the disc.

24. The disc cleaner of one of claims 1 to 3, wherein the supporting body includes a storage portion for storing the rotary knob and another storage portion for storing a bottle of a cleaning liquid for cleaning the first disc.
